# EUROPEAN PATENT APPLICATION

(11) **EP 4 563 001 A1**
(43) Date of publication of application: **04.06.2025**
(21) Application number: 24215316.1
(22) Date of filing: 26.11.2024
(51) Int. Cl.: A21C 11/10, A21C 11/04

(54) **MACHINE AND METHOD FOR WORKING GLUTEN-FREE SHAPED DOUGHS**

(30) Priority: 30.11.2023 IT 202300025536
(71) Applicant: Dr. Schär S.P.A., 39014 Postal (IT)
(72) Inventor: Cerne, Virna Lucia, 34011 Duino-Aurisina (TS) (IT); Polenghi, Ombretta, 34136 Trieste (TS) (IT); Porro, Bruno, 12050 Montelupo Albanese (CN) (IT)
(74) Representative: Petraz, Gilberto Luigi

(57) **Abstract**

Machine (10) for working gluten-free shaped doughs (100), comprising at least one apparatus (12) for moving the shaped doughs (100) along a working line (L) and an ultrasonic cutting unit (13) to cut them, obtaining at least two dough portions (101).

## Description

### FIELD OF THE INVENTION

The present invention concerns a machine and the corresponding method for working gluten-free shaped doughs with which baked products, such as loaves of bread, rolled breads of the type for *tramezzini,* sandwiches or suchlike, are obtained.

### BACKGROUND OF THE INVENTION

Machines for working shaped doughs, that is, doughs with their own shape, which is maintained even during the corresponding working, are known, able to obtain baked food products such as rolled breads, or suchlike.

These machines work these doughs substantially in a first step, in which the shaped dough is cut, and a second step, in which the portions thus obtained are disposed in a collection container, or baking tray.

Normally, in these machines, a conveyor belt makes the dough advance toward the baking tray, and during this advance the dough is cut into several portions, normally four, by fixed blades disposed above the belt.

In correspondence with the end of the conveyor belt, there is a system for rotating the cut portions, below which said tray is positioned. The rotation system comprises several diverting elements, such as bars, rods, pegs, which are disposed between the end of the conveyor belt and the baking tray, and are fixed with an orientation such as to determine a rotation of about 90° of the aforementioned portions when the latter, falling from the conveyor belt toward the baking tray, interact with them.

This type of working is essential to allow for a good development of the loaf, keeping the internal alveolation homogeneous. In particular, the rotation of the cut portions changes the direction of the alveoli, limiting the formation of holes and developing a fine and homogeneous alveolation.

Such known machines, however, have the disadvantage of being designed substantially only for gluten doughs, which have consistency and/or stickiness characteristics with low variability, while gluten-free doughs, on the other hand, have very variable consistency and stickiness characteristics.

Using the known machines with gluten-free doughs could have disadvantages related to the cutting, since fixed cutting blades are not ideal for very sticky doughs both because a part of the dough could remain attached to the blades, and also because a correct cutting is not guaranteed.

Moreover, the known rotation system would also be ineffective because the cut portions, being stickier, would tend to slide on the diverting elements, without rotating or rotating only partly.

There is therefore the need to perfect a machine for working gluten-free shaped doughs that can overcome at least one of the disadvantages of the state of the art.

To do this, it is necessary to solve the technical problem of providing a machine for working gluten-free shaped doughs that is able to perform a precise cutting of the doughs, so as to obtain portions that are then suitably rotated and deposited in the respective trays, in order to prevent irregularities in the positioning of the dough portions and to prevent inhomogeneities in structure and weight.

In particular, one purpose of the present invention is to provide a machine and to perfect a method for working gluten-free shaped doughs that are highly efficient, versatile and that allow to achieve high productivity.

Another purpose of the present invention is to provide a machine for working gluten-free shaped doughs in which the cutting means do not leave any residues that could interrupt the working.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the technical problem described above in a new and original way, also achieving considerable advantages compared to the state of the prior art, a machine according to the present invention for working gluten-free shaped doughs comprises at least one apparatus for moving the shaped doughs along a working line.

In accordance with one aspect of the present invention, the machine comprises an ultrasonic cutting unit to cut the shaped doughs, obtaining at least two dough portions. The movement apparatus comprises, in succession, at least one transport unit operationally coordinated with the cutting unit and able to transport both the shaped doughs toward the latter, in order to perform the cutting, and also the dough portions thus obtained along the working line. Moreover, the movement apparatus comprises means for transferring the portions from the transport unit to a subsequent zone.

The cutting unit is disposed above the transport unit and comprises at least one ultrasonic blade positioned in an adjustable manner and configured both to pass between a resting position, in which it is raised, and a cutting position, in which it is selectively lowered toward the transport unit to cut a corresponding shaped dough, and also to vibrate, during the cutting.

The cutting unit can comprise at least a first blade disposed centrally along an axis of symmetry of the machine, so as to cut and divide each shaped dough into at least two uniform dough portions, and at least a second and a third blade disposed mirroring each other with respect to the axis of symmetry, set back and transversely offset with respect to the first blade, so as to divide the two dough portions cut by the latter into at least two other dough portions.

Compared to conventional blades, ultrasonic blades, thanks to the corresponding vibration, create an air cushion that strongly limits any direct contact with the food to be cut, clearly separating the surfaces subject to cutting without leaving residues. Therefore, the ultrasonic blades advantageously allow to perform a clean, precise cut that does not deform or damage the dough, allowing to cut very soft or sticky gluten-free doughs, without dirtying the blades and the working line, and avoiding stops in production caused by the dough adhering to the blades.

The transport apparatus comprises a transport device provided with a plurality of transport cradles disposed in parallel rows, wherein each row is provided with at least two transport cradles having respective housing seatings aligned with each other to receive and transport one shaped dough at a time and the corresponding dough portions obtained from the cutting.

In addition, the transport cradles of each row are configured to slide and progressively distance themselves from each other during the respective advance, in order to pass from a contracted condition, in correspondence with the cutting unit, in which they are distanced from each other to allow the at least one ultrasonic blade to be inserted between them in order to cut the shaped dough, so that in each transport cradle there is a respective dough portion, to an expanded condition, in correspondence with the transfer means.

Each transport cradle comprises a lower coupling part which is configured to couple with a respective pair of feed rollers of the transport device, and is provided at the lower part with a guide pin able to cooperate with guide means disposed under the transport device, to allow the sliding and distancing of each transport cradle present on a corresponding row.

The guide means comprise two or more pairs of tracks disposed mirroring each other and diverging with respect to the axis of symmetry, wherein the tracks of each pair are distanced from each other to define a guide where the guide pin is sliding.

The transfer means are disposed close to a terminal part of the transport unit and comprise an anthropomorphic robotic device having a manipulation head provided with at least two gripping members which are configured both to pick up corresponding dough portions present in respective transport cradles, holding them stably, and also to rotate them by an angle of 90° and then deposit them inside containing means present there.

The present invention also concerns a method for working gluten-free shaped doughs, carried out by a machine having a movement apparatus that implements a step of moving the shaped doughs along a working line.

In accordance with another aspect of the present invention, the method comprises: a cutting step, in which an ultrasonic cutting unit of the machine cuts the shaped doughs, obtaining at least two dough portions; one or more transport steps, in which a transport unit, operationally coordinated with the cutting unit, transports both the shaped doughs toward the latter in order to perform the cutting, and also the dough portions thus obtained along the working line; and a transfer step, in which transfer means transfer the at least two portions to a subsequent zone.

In the cutting step, at least one ultrasonic blade of the cutting unit, passing from a resting position to a cutting position, is lowered toward the transport unit and cuts a corresponding shaped dough while it vibrates, thus obtaining at least two dough portions.

The transport device makes a respective row of transport cradles of a shaped dough progressively advance with a certain pitch, which is coordinated with the operating times of the cutting unit so that during the cutting step each row of transport cradles is stationary.

In a first transport step, the transport cradles of each row are in a contracted condition, in which they are distanced from each other to allow the at least one ultrasonic blade to be inserted between them in order to cut the shaped dough, so that in each transport cradle there is a respective dough portion. Following the cutting step, in a second transport step the transport cradles, advancing toward the transfer means, cooperate with corresponding guide means disposed under the transport device to slide along respective feed rollers with which the transport cradles are associated, progressively distancing themselves from each other and thus moving to an expanded condition.

In the transfer step, an anthropomorphic robotic device of the transfer means, by means of respective gripping members, picks up corresponding dough portions present in respective transport cradles, holding them stably, to then rotate them by 90° and then deposit them inside containing means present there.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a three-dimensional, schematic and simplified view of a machine for working gluten-free doughs according to the present invention;
- fig. 2 is a lateral, schematic and simplified view of the machine of fig. 1 disposed in a protection chamber;
- fig. 3 is a schematic and simplified top view of the machine of fig. 1;
- figs. from 4 to 7 are schematic and simplified top views of an operating sequence for cutting a gluten-free dough;
- fig. 8 is a detailed three-dimensional view of the machine of fig. 1 during the cutting of the gluten-free dough;
- fig. 9 is a lateral view of a detail of the machine of fig. 1;
- fig. 10 is a detailed and exploded three-dimensional view of a transport device of the machine of fig. 1;
- figs. 11 and 12 are detailed three-dimensional views of the machine of fig. 1 during the picking up and depositing of already cut dough portions.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

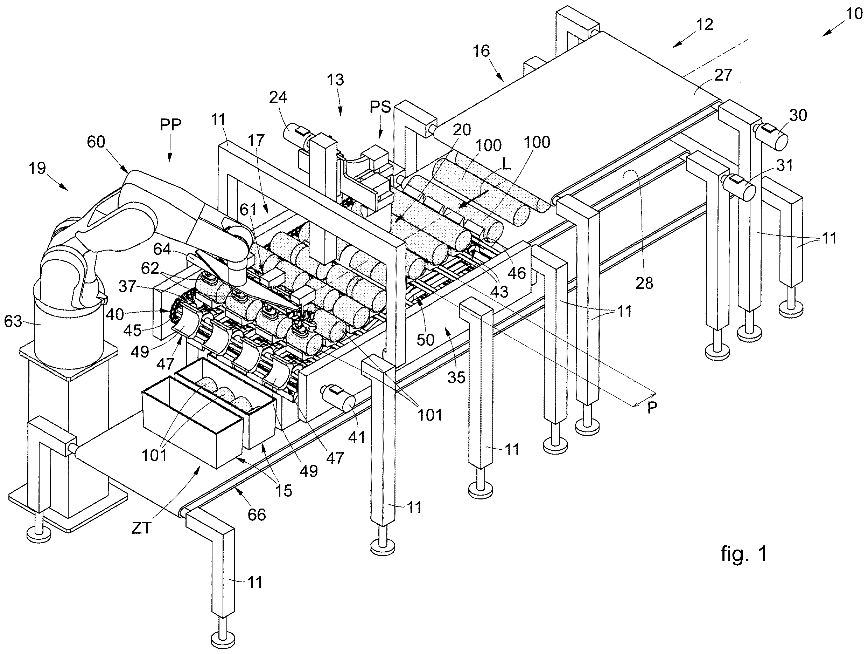

With reference to fig. 1, a machine 10 according to the present invention is suitable for working gluten-free shaped doughs 100, with which baked products, such as loafs of bread, rolled breads of the type for *tramezzini,* sandwiches or suchlike, are obtained.

We wish to clarify that by the term "shaped" we mean that the doughs have already been subjected to one or more workings and have their own defined shape and a cohesion such that during the subsequent working they maintain that shape. Preferably, the shaped doughs 100 have an oblong shape, for example cylindrical. It is clear that in other embodiments, not shown, the shaped doughs 100 may have another shape, for example parallelepiped.

The machine 10 comprises a fixed support structure 11 with which respective operating units and/or components configured to perform the working of the doughs 100 are associated.

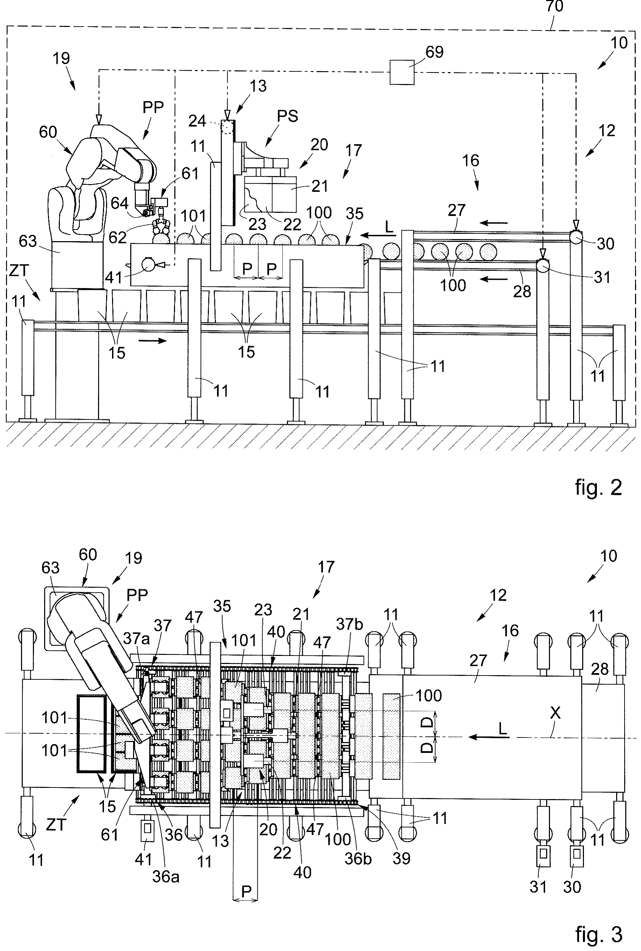

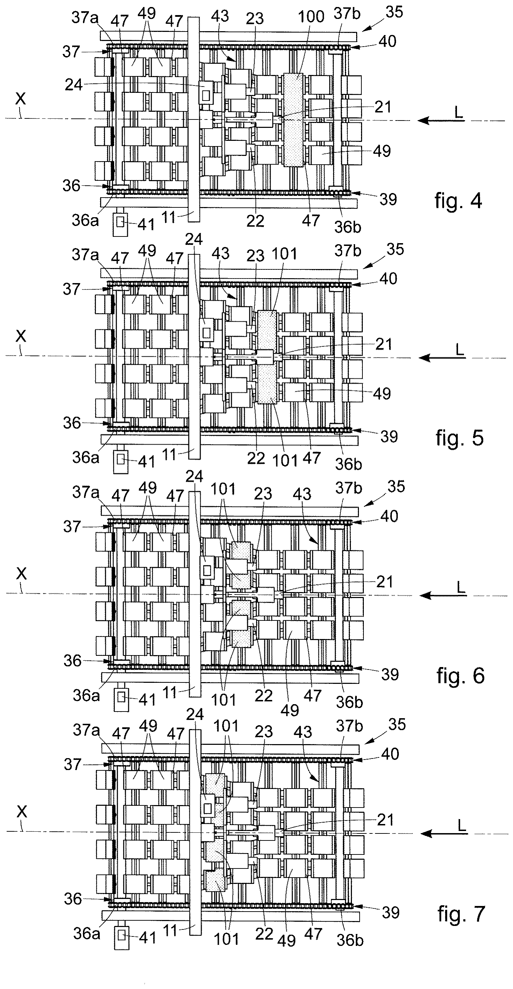

The machine 10 (figs. 1, 2 and 3) comprises at least one movement apparatus 12 configured to move the shaped doughs 100 along a working line L, and an ultrasonic cutting unit 13 configured to cut the shaped doughs 100 to obtain two or more dough portions 101 to be transferred to a terminal zone ZT of the working line L. In the terminal zone ZT there can be corresponding containing means 15 able to receive the dough portions 101 and to be moved toward another working zone, not shown in the drawings. The movement apparatus 12 and the cutting unit 13 are associated with the support structure 11.

The movement apparatus 12 comprises, in succession along the working line L, feed means 16 for feeding the shaped doughs 100 in a sequenced manner, a transport unit 17, operationally coordinated with the cutting unit 13, which is able to transport both the shaped doughs 100 toward the latter in order to perform the cutting, and also the dough portions 101 thus obtained toward the terminal zone ZT, and transfer means 19 for transferring the dough portions 101 from the transport unit 17 to the terminal zone ZT. In particular, the transfer means 19 are able to transfer the dough portions 101 into the containing means 15.

We must clarify that by the expression "in a sequenced manner" we mean that the shaped doughs 100 are fed one after the other according to certain feeding operating times, in coordination with the cutting operating times of the cutting unit 13.

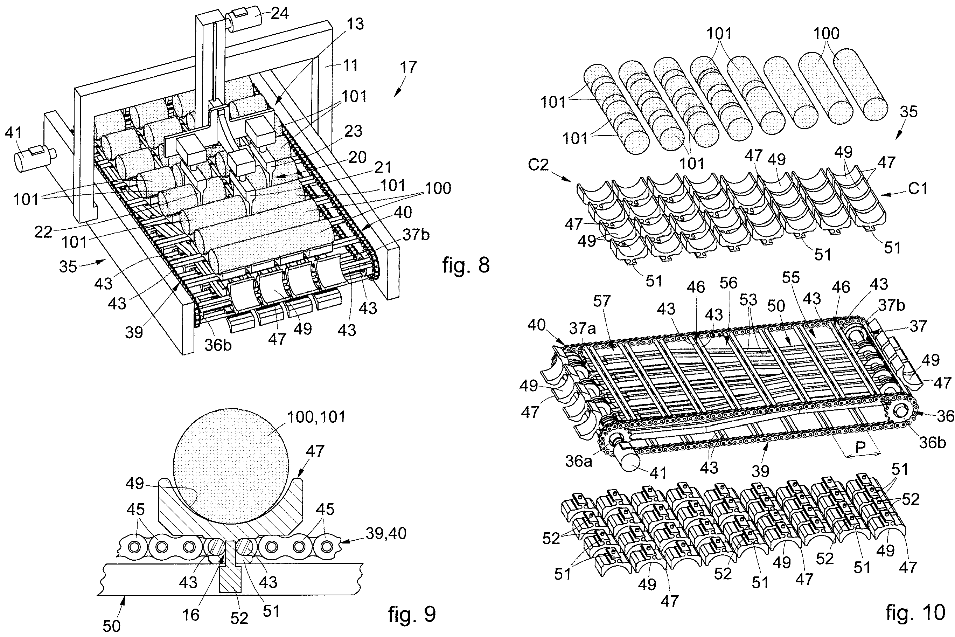

The cutting unit 13 is disposed above the transport unit 17 and comprises at least one ultrasonic blade 20 positioned in an adjustable manner and configured both to pass between a resting position PR, in which it is raised, and a cutting position PT, in which it is selectively lowered toward the transport unit 17 to cut a corresponding shaped dough 100, and also to vibrate during the cutting (figs. 1 and 8). For example, the vibration is obtained by means of a piezoelectric device, not visible in the drawings, which, by generating an electric voltage, makes the at least one ultrasonic blade 20 vibrate even 20,000 times per second. Advantageously, the vibration allows the ultrasonic blade 20 to perform the cutting without significant parts, or lumps, of the shaped doughs 100 remaining stuck to it.

The cutting unit 13 comprises at least a first blade 21 (figs. 1 and from 3 to 7) disposed centrally along an axis of symmetry X of the machine 10, so as to cut and divide each shaped dough 100 into two uniform dough portions 101. A second 22 and a third blade 23 are disposed mirroring each other with respect to the axis of symmetry X, set back with respect to the first blade 21 and transversely offset with respect thereto by a distance D, so as to divide each already cut shaped dough 100 into two other uniform dough portions 101, thus obtaining four dough portions 101.

We must clarify that by the term "transversely" we mean a direction perpendicular to the axis of symmetry X.

The cutting unit 13 comprises a first drive member 24 connected to transmission means having the function of driving the ultrasonic blades 20 between the resting position PR and the cutting position PT.

According to preferred embodiments, the feed means 16 (figs. 1, 2 and 3) can comprise a first 27 and a second 28 feed belt operationally associated with each other to feed each shaped dough 100.

In order to optimize the space of the machine 10, the first 27 and second 28 feed belt are advantageously disposed one above the other and fixed to the support structure 11 in an adjustable manner.

The first 27 and second 28 feed belt are connected to a second 30 and third 31 drive member, respectively, able to drive them in a synchronized manner. There can also be conveying elements, not shown in the drawings, to correctly convey the shaped doughs 100 toward the transport apparatus 17.

The transport apparatus 17 (figs. from 1 to 3 and 10) comprises a transport device 35 provided with two pairs of gear wheels 36, 37 axially aligned with each other, disposed on opposite sides, also in a mirroring manner, with respect to the axis of symmetry X and connected to respective transmission chains 39, 40.

Each pair of gear wheels 36, 37 comprises a driving gear wheel 36a, 37a and a return gear wheel 36b, 37b. The driving gear wheels 36a, 37a are connected to each other by means of a connection shaft and to a respective fourth drive member 41, which is able to drive them with a pitch P. The return gear wheels 36b, 37b are also connected to each other by means of a respective connection shaft.

The transport device 35 (fig. 10) comprises a plurality of pairs of feed rollers 43 attached, on opposite sides, to respective links 45 of the transmission chains 39, 40, transversely with respect to the working line L and suitably distanced from each other. The feed rollers 43 are attached to the connection pins of each mesh 45 and are distanced from each other so as to define a hollow space 46 between them.

With each pair of feed rollers 43 there are associated sliding two or more transport cradles 47 disposed in parallel rows, wherein each row is provided with at least two transport cradles 47 having respective housing seatings 49 aligned with each other to receive and transport one shaped dough 100 at a time and the corresponding dough portions 101 obtained from the cutting. Preferably, there are four transport cradles 47.

The transport cradles 47 of each row are configured to slide and progressively distance themselves from each other during the respective advance, in order to pass from a contracted condition C1, in correspondence with the cutting unit 13, in which they are distanced from each other to allow the at least one ultrasonic blade 20 to be inserted between them in order to cut the shaped dough 100, so that in each transport cradle 47 there is a respective dough portion 101, to an expanded condition C2, in correspondence with the transfer means 19.

The transport device 35 is able to make each row of transport cradles 47 advance with the certain pitch P so that this advance is coordinated with the operating times of the cutting unit 13, and that during the cutting of the shaped doughs 100 the transport cradles 47 are stationary. This advantageously allows to perform a very precise cutting of the shaped doughs 100.

The transport cradles 47 of each row, advancing toward the transfer means 19, are able to cooperate with corresponding guide means 50, disposed under the transport device 35, to slide transversely with respect to the axis of symmetry X along the respective feed rollers 43, progressively distancing themselves from each other, thus moving to the expanded condition C2 and being correctly set up for the subsequent transfer.

Preferably, each transport cradle 47 is provided with a lower coupling part 51 able to couple with the hollow space 46 of the respective pair of feed rollers 43, in order to slide along the latter keeping the dough portion 101 in a stable position.

In addition, the coupling part 51 is provided at the lower part with a guide pin 52 able to cooperate with the guide means 50 to allow the correct sliding and distancing of each transport cradle 47 present on a corresponding row, until the expanded condition C2 is reached.

The guide means 50 can comprise two or more pairs of tracks 53 disposed mirroring each other and diverging outward with respect to the axis of symmetry X to determine the distancing of the transport cradles 47.

The tracks 53 of each pair are distanced from each other to define a respective guide in which a corresponding guide pin 52 is sliding. For example, an internal pair of tracks 53, closer to the axis of symmetry X, and an external pair of tracks 53 can be disposed, mirroring each other, on either side of the axis of symmetry X.

The tracks 53 of each pair are provided with at least a first rectilinear segment 55, a segment 56 that diverges with respect to the axis of symmetry X, and a second rectilinear segment 57. The internal pairs of tracks 53 have a diverging segment 56 that is shorter than that of the external pairs of tracks 53.

The transfer means 19 (figs. from 1 to 3, 11 and 12) are disposed close to a terminal part of the transport unit 17 and can comprise at least one anthropomorphic robotic device 60 having a manipulation head 61 provided with two or more gripping members 62 which are configured both to pick up and retain corresponding dough portions 101 made to advance by the transport unit 17, and also to rotate them by about 90° and then deposit them inside the containing means 15. The number of gripping members 62 is equal to the number of transport cradles 47.

According to preferred embodiments, the gripping members 62 are internally hollow and connected to suction means to create a vacuum. Preferably, the gripping members 62 consist of, or comprise, vacuum suckers.

The arrangement of the gripping members 62 is such as to guarantee a stable and balanced grip on the dough portions 101.

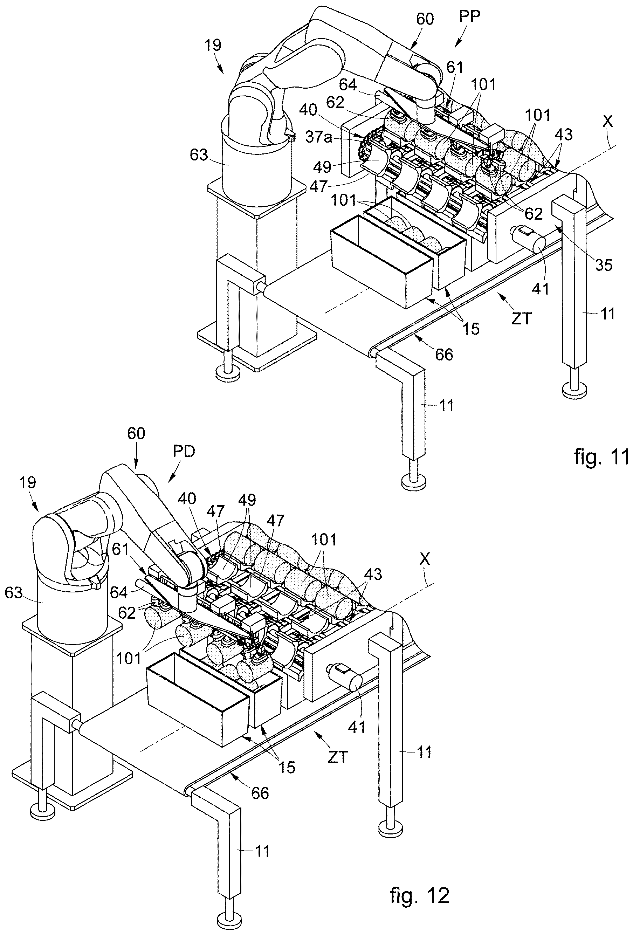

The robotic device 60 is, for example, a robot with multiple axes of rotation, known to the people of skill in the art. The robotic device 60 is configured to pass at least between at least one pick-up position PP (fig. 11), in which it is disposed with the manipulation head 61 close to the transport unit 17 so as to pick up the dough portions 101 with the gripping members 62, and a deposit position PD (fig. 12), in which it is disposed with the manipulation head 61 above a corresponding containing mean 15 to release the dough portions 101 therein. The transfer means 19 also comprise at least a fifth drive member 63 able to determine the drive of the robotic device 60.

In addition, the gripping members 62 can be connected to an adjustment member 64 able to adjust their position and, therefore, also their reciprocal distance, during the passage from the pick-up position PP to the deposit position PD.

The rotation performed by the gripping members 62 advantageously allows to correctly distance each dough portion 101 that has to be disposed in the containing means 15.

The containing means 15 are associated with a transport system 66 to transport them toward another working zone, not shown in the drawings.

Preferably, the transport system 66 is disposed under the movement apparatus 12 and the direction in which the containing means 15 are made to advance is opposite to the direction in which the shaped doughs 100 are made to advance.

The machine 10 also comprises a central control unit 69 programmed to control and command the activation of the drive members 24, 30, 31, 41 and 63, as well as other operating means of the movement apparatus 12, the cutting unit 13 and the transport system 66, not described in detail, so that their movements are synchronized with each other.

Preferably, the machine 10 is disposed in a controlled atmosphere protection chamber 70, so that the working of the shaped doughs 100 is performed in a protected, aseptic and controlled environment.

The operation of the machine 10 described heretofore, which corresponds to the method according to the present invention, comprises the following steps.

We must clarify that what will be eventually described for a single shaped dough 100 will be valid cyclically for each of the shaped doughs 100.

In a preparation step, the central control unit 69 is set up to control and coordinate the drive of the movement apparatus 12, the cutting unit 13 and the transport system 66, as well as the drive members 24, 30, 31, 41 and 63, and other respective drive means. In addition, the ultrasonic blades 20 are in the resting position PR and the robotic device 60 is also in a resting position, so as not to interfere with the transport cradles 47.

The method comprises a main step of moving the shaped doughs 100 performed by the movement apparatus 12. The movement step comprises a feeding step, one or more transport steps and a transfer step.

In the feeding step, the shaped doughs 100 are fed in a sequenced manner by the feed means 16 (fig. 1). In particular, the second 30 and third 31 drive member activate the first 27 and second 28 feed belt, respectively, in order to feed the shaped doughs toward the transport unit 17, that is, toward the transport device 35.

Then, in a first transport step, the shaped doughs 100 are transported under the cutting unit 13 (figs. from 4 to 8).

Each shaped dough 100 is supported by a corresponding row of transport cradles 47, which is made to advance with a certain pitch P which is coordinated with the lowering times of the ultrasonic blades 20, so that during the cutting of the shaped doughs 100 the transport cradles 47 are stationary. In addition, until they reach the cutting unit 13, the transport cradles 47 are in the contracted condition C1.

Then, in a cutting step, the cutting unit 13 performs the cutting of each shaped dough 100 to obtain several dough portions 101.

In particular, the ultrasonic blades 20, passing from the resting position PR to the cutting position PT, are lowered so as to cut each shaped dough 100 into two or more dough portions 101. During the cutting, the ultrasonic blades 20 vibrate so as to make a clean cut and prevent any parts, or lumps, of the shaped dough 100 from sticking to them. In addition, in passing to the cutting position PT, the ultrasonic blades 20 are inserted between the transport cradles 47 which, in the contracted condition C1, are suitably distanced from each other.

Preferably, during the cutting step, the first 21, second 22 and third 23 blade are lowered simultaneously in order to perform a cutting of two consecutive shaped doughs 100.

Specifically, the first blade 21, lowering, cuts and divides a shaped dough 100 into two uniform dough portions 101. Then, the dough portions 101 thus obtained are made to advance with the pitch P so as to be under the second 22 and third 23 blade, while another shaped dough 100 is made to advance so as to be under the first blade 21. Then, with a subsequent lowering of the blades 21, 22, 23, the two dough portions 101 are in turn cut and divided in two, so as to obtain four uniform dough portions 101, while the first blade 21 cuts and divides the other shaped dough 100 into two corresponding uniform dough portions 101. At the end of this cutting, there is a respective dough portion 101 in each transport cradle 47.

We must clarify that during the advance from the first blade 21 to the second 22 and third blade 23, the transport cradles 47 can begin to distance themselves, sliding along the feed rollers 43 thanks to the guide means 50.

Subsequently, in a second transport step, the transport device 35 (fig. 10) makes the dough portions 101 advance with the pitch P toward the transfer means 19. During the transport step, the transport cradles 47, cooperating with the guide means 50, are progressively distanced from each other until they reach the expanded condition C2, in correspondence with the terminal part of the transport device 35.

Subsequently, in the transfer step, the transfer means 19 transfer the dough portions 101 toward the terminal zone ZT of the working line L, rotating them in a suitable manner (figs. 11 and 12). The transfer step comprises a step of picking up the dough portions 101 and a subsequent step of depositing them in respective containing means 15.

During the pick-up step, the robotic device 60 passes to the pick-up position PP (fig. 11) and picks up the dough portions 101 with the gripping members 62, holding them by means of the suction means.

Then, in a depositing step, the robotic device 60 passes from the pick-up position PP to the deposit position PD (fig. 12), and rotates the dough portions 101 by about 90° with the gripping members 62; then it deposits them into the containing means 15 by deactivating the suction means.

Once the dough portions 101 have been deposited in the corresponding containing mean 15, the transport system 66 makes the latter advance toward another working zone.

It is clear that modifications and/or additions of parts may be made to the machine 10 and to the method as described heretofore, without thereby departing from the field and scope of the present invention, as defined by the claims.

It is also clear that, although the present invention has been described with reference to some specific examples, a person of skill in the art will be able to achieve other equivalent forms of machine for working gluten-free shaped doughs, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Machine (10) for working gluten-free shaped doughs (100), comprising at least one apparatus (12) for moving said shaped doughs (100) along a working line (L), **characterized in that** it comprises an ultrasonic cutting unit (13) to cut said shaped doughs (100) obtaining at least two dough portions (101), said movement apparatus (12) comprising, in succession, at least one transport unit (17) operationally coordinated with said cutting unit (13) and able to transport both said shaped doughs (100) toward the latter, in order to perform said cutting, and also the dough portions (101) thus obtained along said working line (L), and means (19) for transferring said portions (101) from said transport unit (17) to a subsequent zone.

2. Machine (10) as in claim 1, **characterized in that** said cutting unit (13) is disposed above said transport unit (17) and comprises at least one ultrasonic blade (20) positioned in an adjustable manner and configured both to pass between a resting position (PR), in which it is raised, and a cutting position (PT), in which it is selectively lowered toward said transport unit (17) to cut a corresponding shaped dough (100), and also to vibrate, during said cutting.

3. Machine (10) as in claim 2, **characterized in that** said cutting unit (13) comprises at least a first blade (21) disposed centrally along an axis of symmetry (X) of said machine (10), so as to cut and divide each shaped dough (100) into at least two uniform dough portions (101), and at least a second (22) and a third (23) blade disposed mirroring each other with respect to said axis of symmetry (X), set back and transversely offset with respect to said at least first blade (21), so as to divide said dough portions (101) cut by the latter into at least two other uniform dough portions (101).

4. Machine (10) as in claim 1, 2 or 3, **characterized in that** said transport apparatus (17) comprises a transport device (35) provided with a plurality of transport cradles (47) disposed in parallel rows, wherein each row is provided with at least two transport cradles (47) having respective housing seatings (49) aligned with each other to receive and transport one shaped dough (100) at a time and the corresponding dough portions (101) obtained from said cutting.

5. Machine (10) as in claim 4 when it depends on claim 2 or 3, **characterized in that** the transport cradles (47) of each row are configured to slide and progressively distance themselves from each other during the respective advance, in order to pass from a contracted condition (C1), in correspondence with said cutting unit (13), in which they are distanced from each other to allow said at least one ultrasonic blade (20) to cut said shaped dough (100), so that in each transport cradle (47) there is a respective dough portion (101), to an expanded condition (C2), in correspondence with said transfer means (19).

6. Machine (10) as in claim 5, **characterized in that** each transport cradle (47) comprises a lower coupling part (51) which is configured to couple with a respective pair of feed rollers (43) of said transport device (35), and is provided at the lower part with a guide pin (52) able to cooperate with guide means (50) disposed under said transport device (35), to allow the sliding and distancing of each transport cradle (47) present on a corresponding row, said guide means (50) comprising two or more pairs of tracks (53) disposed mirroring each other and diverging with respect to said axis of symmetry (X), wherein the tracks (53) of each pair are distanced from each other to define a guide where said guide pin (52) is sliding.

7. Machine (10) as in any claim hereinbefore, **characterized in that** said transfer means (19) are disposed close to a terminal part of the transport unit (17) and comprise an anthropomorphic robotic device (60) having a manipulation head (61) provided with at least two gripping members (62) which are configured both to pick up corresponding dough portions (101), holding them stably, and also to rotate them by an angle of 90° and then deposit them inside containing means (15) present there.

8. Method for working gluten-free shaped doughs (100), carried out by a machine (10) having an apparatus (12) for moving said shaped doughs (100) along a working line (L), **characterized in that** it comprises a cutting step, in which an ultrasonic cutting unit (13) cuts said shaped doughs (100) obtaining at least two dough portions (101), one or more transport steps, in which a transport unit (17), operationally coordinated with said cutting unit (13), transports both said shaped doughs (100) toward the latter in order to perform said cutting, and also the dough portions (101) thus obtained along said working line (L), and a transfer step, in which transfer means (19) transfer said at least two portions (101) to a subsequent zone.

9. Method as in claim 8, **characterized in that** in said cutting step, at least one ultrasonic blade (20) of said cutting unit (13), passing from a resting position (PR) to a cutting position (PT), is lowered toward said transport unit (17) and cuts a corresponding shaped dough (100) while it vibrates, thus obtaining at least two dough portions (101).

10. Method as in claim 8 or 9, **characterized in that** in said one or more transport steps a transport device (35) of said transport unit (17) makes a respective row of transport cradles (47) of a shaped dough (100) progressively advance with a certain pitch (P), which is coordinated with the operating times of said cutting unit (13) so that during said cutting step each row of transport cradles (47) is stationary, each row being provided with at least two transport cradles (47) having respective housing seatings (49) aligned with each other to receive and transport one shaped dough (100) at a time and the corresponding dough portions (101) obtained from said cutting.

11. Method as in claim 10, **characterized in that** in a first transport step, the transport cradles (47) of each row are in a contracted condition (C1), in which they are distanced from each other to allow said at least one ultrasonic blade (20) to cut said shaped dough (100), so that in each transport cradle (47) there is a respective dough portion (101), **and in that,** following said cutting step, in a second transport step said transport cradles (47), advancing toward said transfer means (19), cooperate with corresponding guide means (50) disposed under said transport device (35) to slide along respective feed rollers (43) with which said transport cradles (47) are associated, progressively distancing themselves from each other and thus moving to an expanded condition (C2).

12. Method as in any claim from 8 to 11, **characterized in that** in said transfer step an anthropomorphic robotic device (60) of said transfer means (19), by means of respective gripping members (62), picks up corresponding dough portions (101) present in respective transport cradles (47), holding them stably, to then rotate them by 90° and then deposit them inside containing means (15) present there.
